# EUROPEAN PATENT APPLICATION

(11) **EP 1 098 316 A2**
(43) Date of publication of application: **09.05.2001**
(21) Application number: 00112350.4
(22) Date of filing: 09.06.2000
(51) Int. Cl.: G11B 21/00

(54) **Process for producing an oscillating actuator**

(30) Priority: 02.11.1999 JP 31288499
(71) Applicant: NAGASE & COMPANY, LTD., Osaka-shi, Osaka 550-8668 (JP); TORAY INDUSTRIES, INC., Tokyo 103-8666 (JP)
(72) Inventor: Ikemoto, Masaya, c/o Nagase & Co., Ltd., Tokyo 103-8355 (JP); Nakamura, Kiyokazu, c/o Toray Industries Inc., Nagoya-shi, Aichi 455-8502 (JP); Matsumoto, Michiyoshi, c/o Toray Industries Inc., Nagoya-shi, Aichi 455-8502 (JP); Fujino, Shingo, c/o Toray Industries Inc., Nagoya-shi, Aichi 455-8502 (JP); Sato, Hiroyuki, c/o Toray Industries Inc., Tokyo 103-8666 (JP)
(74) Representative: Gille Hrabal Struck Neidlein Prop Roos

(57) **Abstract**

A process for producing an oscillating actuator comprising a coil-holding member and a carriage member having a bearing hole and an arm, a coil and the bearing hole being surrounded by a continuous resin, which process comprises placing in a mold the coil and the carriage member having inlets for a melted resin which penetrates the carriage member to the bearing hole and filling an inside of the mold with the melted resin so that the melted resin is pushed into a gap between a portion of the mold for forming a shaft hole and the bearing hole via the inlets and an inner wall layer integrally connected to the coil-holding member is formed inside the bearing hole.

The process can produce an oscillating actuator showing great strength of connection between the coil-holding member and the carriage member and advantageously used for disk apparatuses.

## Description

### BACKGROUND OF THE INVENTION

### 1 . Field of the Invention

The present invention relates to a process for producing an oscillating actuator. More particularly, the present invention relates to a process for producing an oscillating actuator showing great strength of connection between a coil-holding member and a carriage member and advantageously used for disk apparatuses.

### 2. Description of Related Art

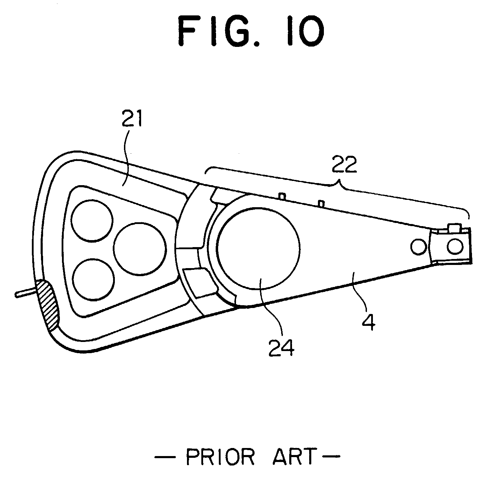

In disk apparatuses such as fixed magnetic disk apparatuses, oscillating actuators in which a functional member such as a magnetic head is driven along an arc are used. Figure 10 shows a plan view of an example of conventional oscillating actuators. The oscillating actuator of the conventional type has a carriage member 22 having a plurality of arms 4 and a shaft hole 24 and a coil 21 for oscillating the carriage member around the shaft hole. At the tip of each arm, a functional member such as a magnetic head is attached via a head suspension. The coil is obtained by winding a lead wire coated with an electrically insulating film. When electric current is passed through the coil, a driving force works on the coil by the effect of the magnetic circuit having a permanent magnet (not shown in the figure) in accordance with the Fleming's Left Hand Law and the carriage member oscillates around the shaft hole.

Recently, because increasing the recording density of magnetic disks and decreasing the access time are required, reduction in the weight of the oscillating actuator itself is desired to further improve precision and speed of positioning of the oscillating actuator. Due to this requirement, oscillating actuators having an arm made of a synthetic resin have been developed. For example, in Japanese Patent Application Laid-Open No. Heisei 3(1991)-277160, an oscillating actuator in which an arm and a movable coil are tightly fixed by a holding member composed of a thermoplastic resin having a modulus of 10 × 10⁴ kg/cm² or greater is proposed as a small and thin oscillating actuator having a molded combination of a coil and an arm which shows high strength and improved electric insulation. To produce this oscillating actuator, a carriage member which is formed by die casting in advance and a coil having a lead wire connected to terminal pins by soldering are inserted into a mold for injection molding and placed at prescribed positions. Then, a thermoplastic resin such as a polyphenylene sulfide resin containing glass fiber is melted by heating and injected into the mold. The outer surface of the carriage member and a portion of the coil are surrounded by the continuous resin and an oscillating actuator of the over-mold type is produced. However, the oscillating actuator of the over-mold type has a problem in that satisfactory reduction in the weight cannot be achieved because the arm is made of a metal. Moreover, adhesion, i.e., adhesive strength, between the metal composing the arm and the injected thermoplastic resin is insufficient and physical properties of the actuator itself are poor.

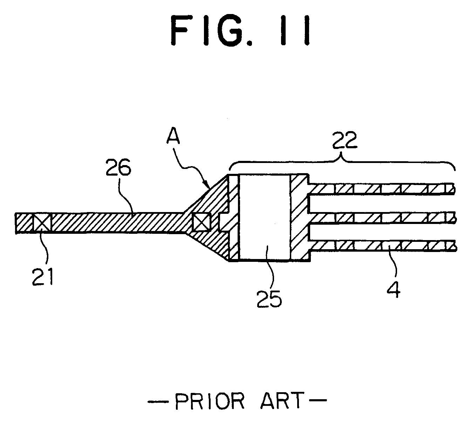

Development of an actuator achieving further reduction in the weight is being attempted by using a resin for the arm in place of a metal. For example, in Japanese Patent Application Laid-Open No. Heisei 8(1996)-339918, an oscillating actuator made of a resin which is obtained by placing a part having a coil and terminal pins fixed with a thermoplastic resin in a mold and molding a carriage member including an arm at once using the same or different thermoplastic resins is proposed as an actuator made of a resin which can be produced at a low cost, has a light weight and shows excellent dimensional precision and mechanical properties. Figure 11 shows a sectional view of this oscillating actuator. This oscillating actuator is composed of a carriage member 22 and a coil-holding member 26. The carriage member has a shaft hole 25 and is integrally formed with a plurality of arms 4. The coil-holding member contains a coil 21 at the inside. One end portion of the coil-holding member and the carriage member are surrounded by a continuous resin. However, in this oscillating actuator made of a resin, the coil-holding member and the carriage member are connected together substantially through the portion shown by the mark A alone. Therefore, this oscillating actuator made of a resin has a problem in that strength of connection between the carriage member and the coil-holding member is small and the oscillating actuator shows poor stability and durability.

### SUMMARY OF THE INVENTION

The present invention has an object to provide a process for producing an oscillating actuator showing great strength of connection between the coil-holding member and the carriage member and advantageously used for disk apparatuses.

As the result of intensive studies by the present inventor to overcome the above problems, it was found that an oscillating actuator having a great strength of connection between a coil-holding member and a carriage member can be easily produced by preparing a carriage member having a fixing part which is formed by a plurality of inlets for a melted resin penetrating the carriage member to a bearing hole, placing a coil and the produced carriage member in a mold and filling the inside of the mold with a melted resin so that the melted resin is pushed into a gap between a portion of the mold for forming a shaft hole and the bearing hole and an inner wall layer integrally connected to the coil-holding member is formed inside the bearing hole. The present invention has been completed based on this knowledge.

The present invention provides:
(1) A process for producing an oscillating actuator including a coil-holding member and a carriage member having a bearing hole and an arm, the coil and the bearing hole being surrounded by a continuous resin, which process includes placing in a mold the coil and the carriage member having inlets for a melted resin which penetrates the carriage member to the bearing hole and filling an inside of the mold with the melted resin so that the melted resin is pushed into a gap between a portion of the mold for forming a shaft hole and the bearing hole via the inlets and an inner wall layer integrally connected to the coil-holding member is formed inside the bearing hole;
(2) A process for producing an oscillating actuator described in (1), wherein the carriage member has, on a side face thereof, a plurality of inlets for a melted resin which penetrate the carriage member to the bearing hole and a fixing portion which is formed as a wall separating the plurality of inlets;
(3) A process for producing an oscillating actuator described in (1), wherein the carriage member is a part integrally formed from an electrically conductive resin; and
(4) A process for producing an oscillating actuator described in (1), wherein the carriage member is a laminate formed from arm pieces and spacers which are disposed alternately and are made of an electrically conductive resin.
   Preferable embodiments of the present invention include:
(5) A process for producing an oscillating actuator described in any of (3) and (4), wherein the electrically conductive resin is a thermoplastic resin comprising carbon fiber; and
(6) A process for producing an oscillating actuator described in (5), wherein the thermoplastic resin is a thermotropic liquid crystal polymer or polyphenylene sulfide.

### BRIEF DESCRIPTION OF THE DRAWINGS

Figure 1 shows a plan view of a coil used in the present invention.
Figure 2 shows a plan view of a terminal pin used in the present invention.
Figure 3 shows a side view of an embodiment of the integrally formed carriage member.
Figure 4 shows a partial side view of an arm used in the present invention.
Figure 5 shows a rear elevation of the carriage member shown in Figure 3.
Figure 6(a) shows a plan view of an arm piece used in the present invention.
Figure 6(b) shows a side view of an arm piece used in the present invention.
Figure 7(a) shows a plan view of a spacer used in the present invention.
Figure 7(b) shows a side view of a spacer used in the present invention.
Figure 8 shows a side view of an embodiment of the carriage member formed by laminating arm pieces and spacers alternately.
Figure 9 shows a plan view of an embodiment of an oscillating actuator produced by using the process of the present invention.
Figure 10 shows a plan view of an example of conventional oscillating actuators.
Figure 11 shows a section view of another example of conventional oscillating actuators.

The numbers in the above figures have the following meanings:
- 1:: An air-core portion
- 2:: An end portion of a lead wire
- 3:: An end portion of a lead wire
- 4:: An arm
- 5:: A bearing hole
- 6:: A base portion
- 7:: An intermediate portion
- 8:: A head portion
- 9:: A swage hole
- 10:: A protrusion
- 11:: A lead wire
- 12:: An inlet for a melted resin
- 13:: A fixing portion
- 14:: A bearing hole portion
- 15:: A depression
- 16:: A protruding boss
- 17:: A depression
- 18:: A concave hole
- 19:: An arm piece
- 20:: A spacer
- 21:: A coil
- 22:: A carriage member
- 23:: An inner wall layer
- 24:: A shaft hole
- 25:: A latch tong
- 26:: A coil-holding member

### DESCRIPTION OF THE PREFERRED EMBODIMENTS

An oscillating actuator including a coil-holding member and a carriage member having a bearing hole and an arm in which a coil and the bearing hole are surrounded by a continuous resin is produced in accordance with the process. The process includes placing in a mold the coil and the carriage member having inlets for a melted resin which penetrates the carriage member to the bearing hole and filling the inside of the mold with the melted resin so that the melted resin is pushed into a gap between a portion of the mold for forming a shaft hole and the bearing hole via the inlets and an inner wall layer integrally connected to the coil-holding member is formed inside the bearing hole.

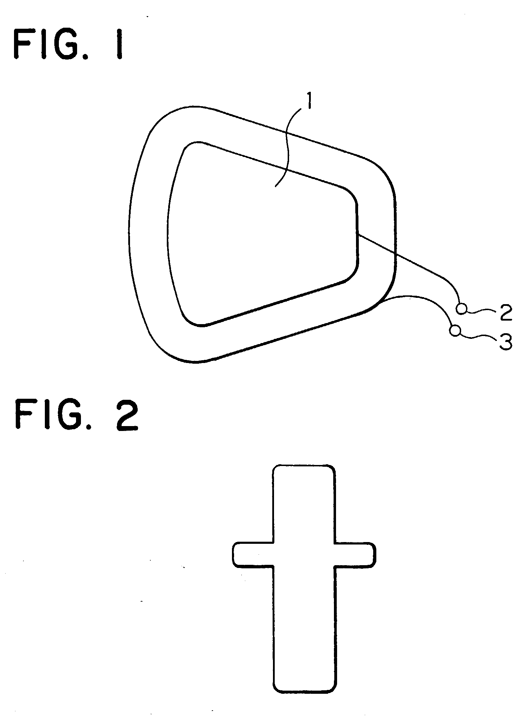

In the process of the present invention, the coil and the carriage member are first produced separately. Figure 1 shows a plan view of an embodiment of the coil used in the process of the present invention. The coil is a symmetric air-core coil having an air-core portion 1. In the air-core coil, end portions 2 and 3 of the lead wire corresponding to the starting and finishing end portions are fixed at prescribed positions. A melt adhesive wire is used as the wire material and the wire material is wound prescribed times around a winding jig having the same outer peripheral shape as the desired shape of the air core. By applying heated air to the wire material during the winding, the wound wire material are fixed by adhesion to each other. The air core having the desired shape can be obtained by removing the winding jig after the wire has been fixed by adhesion. Terminal pins are attached to the end portions 2 and 3 of the lead wire of the air-core coil by spot welding. Figure 2 shows a plan view of a terminal pin used in the present invention. It is preferable that the peripheral portions of the terminal pin are rounded as shown in Figure 2. Due to the rounded shape of the peripheral portions of the terminal pin, damages by contact of the terminal pin with a mold during production of the actuator can be prevented.

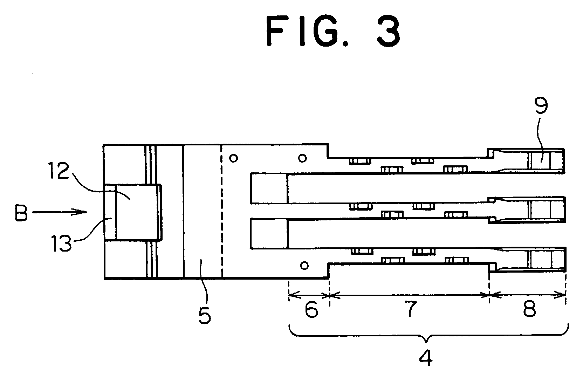

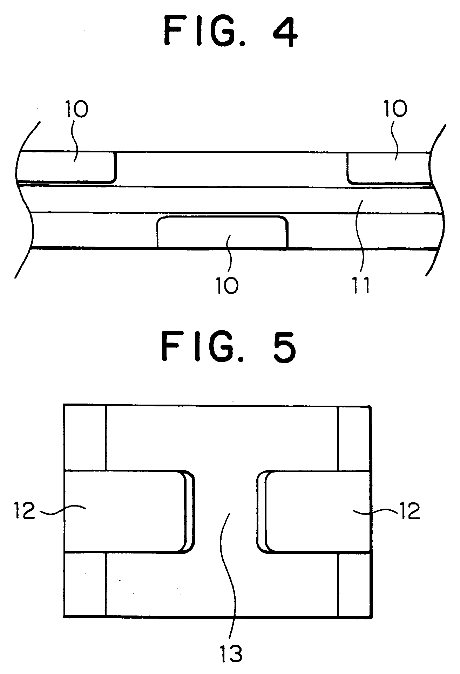

In the process for producing the oscillating actuator of the present invention, a part integrally formed from an electrically conductive resin or a laminate formed from arm pieces and spacers, which are disposed alternately and are made of an electrically conductive resin, may be used as the carriage member. Figure 3 shows a side view of an integrally formed carriage member used in the present invention. The carriage member has a plurality of arms 4 disposed separately in the direction of the thickness of the arm and a bearing hole 5 formed in the direction parallel to the thickness of the arm. The arm is composed of a base portion 6, an intermediate portion 7 and a head portion 8 arranged in this order from the bearing hole in the carriage member. In the head portion, a swage hole 9 for disposing a functional member such as a magnetic sensor via a head suspension is formed in the direction perpendicular to the plane of the arm. The diameter of the swage hole can be suitably selected in accordance with the size of the functional member used. It is preferable that the side face of the arm has a plurality of protrusions 10 formed at upper and lower positions alternately in the area from the intermediate portion to the head portion. Figure 4 shows a partial side view of an arm used in the present invention. Due to the plurality of protrusions 10 formed at upper and lower positions alternately, a lead wire 11 extending from the functional member disposed at the swage hole can be surely held along the side face of the arm. It is preferable that peripheral portions of the protrusions are rounded so that damages on the insulation films and break of the lead wire are prevented.

In the process of the present invention, the number of the arm comprised in the carriage member is not particularly limited and can be suitably selected in accordance with the number of the disk used in the disk apparatus. The number is preferably 1 to 20 and more preferably 2 to 10. The thickness of the arm is not particularly limited and can be suitably selected in accordance with the disk apparatus. The thickness is preferably about 0.1 to about 10 mm and more preferably about 1 to about 3 mm.

In the process of the present invention, the diameter of the bearing hole is designed so as to be somewhat larger than the size of the shaft hole in the actuator placed into a disk apparatus. In other words, the thickness of the inner wall layer formed by the continuous resin surrounding the coil and the bearing portion of the carriage member is taken into consideration so that the inner diameter of the formed shaft hole has the prescribed value and the diameter of the bearing hole is designed so as to be somewhat larger that of the shaft hole. For example, when the inner diameter of the shaft hole of the oscillating actuator as the completed product is about 13 mm, it is preferable that the diameter of the bearing hole in the carriage member is about 14 to about 15 mm when the carriage member is produced.

Figure 5 shows a rear elevation of the carriage member shown in Figure 3 from the direction of the mark B. The carriage member has, at the side face thereof, two inlets 12 for a melted resin penetrating the carriage member to the bearing hole and a fixing portion 13 formed as the wall separating the two inlets. When the melted resin is injected into the inside of the mold, the melted resin is pushed into the gap between the portion of the mold for forming the shaft hole and the bearing hole via the inlets. Thus, an inner wall layer connected to the coil-holding member is formed in the bearing hole and the resin surrounds the fixing portion to strongly connect the coil-holding member to the carriage member. The shape and the size of the inlet is not particularly limited and can be suitably selected in accordance with the viscosity of the resin filing the mold. The number of the inlet is not particularly limited. A plurality of inlets can be formed so that the fixing portion is formed.

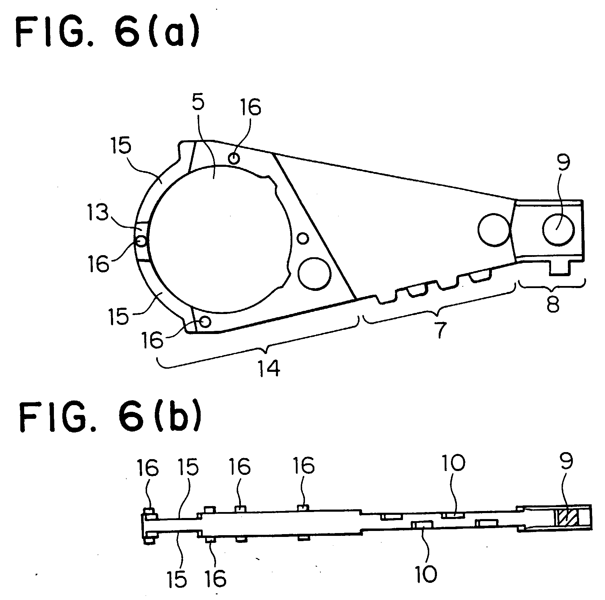

Figure 6(a) shows a plan view of an embodiment of the arm piece used in the process of the present invention. Figure 6(b) shows a side view of the arm piece. The arm piece has a bearing hole 5. The arm piece also has a bearing hole portion 14, an intermediate portion 7 and a head portion 8 arranged in this order from the bearing hole. The diameter of the bearing hole is designed so as to be somewhat larger than the size of the shaft hole in the actuator placed into a disk apparatus. In other words, the thickness of the inner wall layer formed by the continuous resin surrounding the coil and the bearing portion of the carriage member is taken into consideration so that the inner diameter of the formed shaft hole has the prescribed value and the diameter of the bearing hole is designed so as to be somewhat larger that of the shaft hole. For example, when the inner diameter of the shaft hole of the oscillating actuator as the completed product is about 13 mm, it is preferable that the diameter of the bearing hole is about 14 to about 15 mm when the arm piece is produced.

In the head portion, a swage hole 9 for disposing a functional member such as a magnetic sensor via a head suspension is formed in the direction perpendicular to the plane of the arm. The diameter of the swage hole can be suitably selected in accordance with the size of the functional member used. In the bearing hole portion, depressions 15 for forming inlets for a melted resin and a plurality of protruded bosses 16 are formed. The height of the protruded boss is smaller than about 1/2 of the thickness of the spacer. As shown in Figure 6(a), it is preferable that the depressions 15 for forming inlets for a melted resin are formed in the direction of the width of the arm piece with at least one protruding boss disposed between the depressions.

It is preferable that the side face of the arm piece has a plurality of protrusions 10 formed at upper and lower positions alternately in the area from the intermediate portion to the head. portion. Due to the plurality of protrusions 10 formed at upper and lower positions alternately, a lead wire extending from the functional member disposed at the swage hole can be surely held along the side face of the arm. It is preferable that peripheral portions of the protrusions are rounded so that damages on the insulation films and break of the lead wire are prevented. The thickness of the arm piece is not particularly limited and can be suitably selected in accordance with the disk apparatus. The thickness is preferably about 0.1 to about 10 mm and more preferably about 1 to about 3 mm.

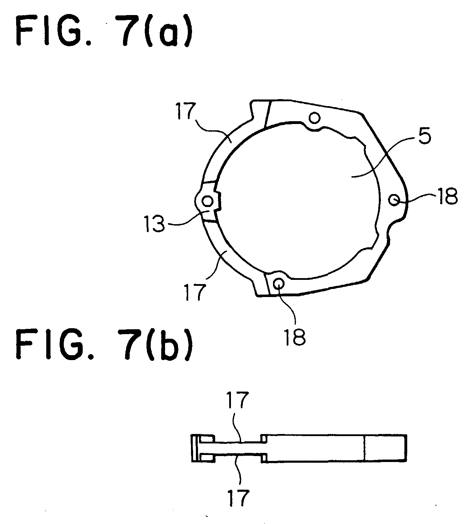

Figure 7(a) shows a plan view of a spacer used in the process of the present invention. Figure 7(b) shows a side view of the spacer. The spacer has a bearing hole 5, depressions 17 for forming inlets for a melted resin and a plurality of concave holes 18. It is preferable that the diameter of the bearing hole in the spacer is the same as the diameter of the bearing hole in the arm piece. The plurality of concave holes in the spacer are formed at positions corresponding to the positions of the plurality of protruded bosses in the arm piece. The arm pieces and the spacers can be laminated together by fitting the protruded bosses into the concave holes. The depressions for forming inlets for a melted resin in the spacer are formed at positions corresponding to the positions of the depressions for forming inlets for a melted resin in the arm piece. When the arm pieces and the spacers are laminated together, inlets for a melted resin can be formed from the depressions in the arm pieces and the spacers. The thickness of the spacer is not particularly limited and can be suitably selected in accordance with the disk apparatus. The thickness is preferably about 0.1 to about 10 mm and more preferably about 1 to about 3 mm.

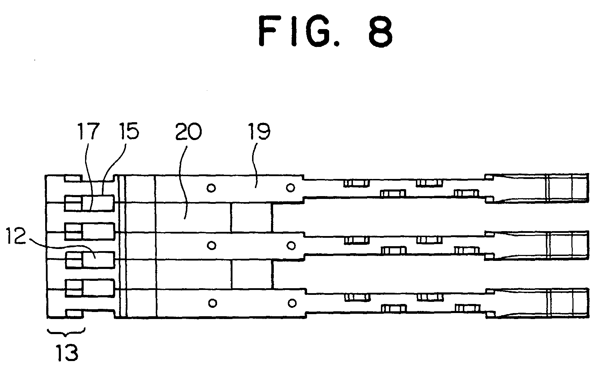

Figure 8 shows a side view of an example of the carriage member prepared by laminating the arm pieces and the spacers alternately. By fitting the protruded bossed in the arm pieces into the concave holes in the spacer, the arm pieces 19 and the spacers 20 can be disposed alternately to form a laminate. By the lamination of the arm pieces and the spacers, the depressions 15 in the arm pieces and the depressions 17 in the spacers are disposed so as to be faced to each other and the inlets 12 and the fixing portion 13 are formed. The inlets 12 penetrate the carriage member formed form the laminate to the bearing hole. An adhesive may be optionally used for lamination of the arm pieces and the spacers. In the process of the present invention, the number of the arm piece used for the carriage member composed of the laminate is not particularly limited and can be suitably selected in accordance with the number of the disk used in the disk apparatus. The number is preferably 1 to 20 and more preferably 2 to 10.

In the process of the present invention, it is preferable that any of the integrally formed carriage member and the carriage member composed of the laminate are produced from an electrically conductive resin. The electrically conductive resin is not particularly limited. It is preferable that the electrically conductive resin is a thermoplastic resin containing carbon fiber. When the carriage member is made of an electrically conductive resin, electrostatic charge is not formed in the carriage member and adverse effects of electrostatic charge on functional members attached to the arm of the oscillating actuator can be prevented. It is preferable that the electrically conductive resin forming the carriage member has a volume inherent resistivity of about 10 to about 10⁵ Ω·cm and more preferably about 10² to about 10⁴ Ω·cm. When the resin has a volume inherent resistivity smaller than 10 Ω·cm, the amount of carbon fiber mixed with the resin increases and, there is the possibility that moldability deteriorates. When the resin has a volume inherent resistivity exceeding 10⁵ Ω·cm, there is the possibility that the adverse effects of electrostatic charge arise.

In the present invention, the thermoplastic resin used for the electrically conductive resin is not particularly limited. Examples of the thermoplastic resin include thermotropic liquid crystal polymers, polyphenylene sulfide resins, polyamide resins such as nylon, polyamideimide resins, polyimide resins, polyacetal resins, polycarbonate resins, modified polyphenylene ether resins, polyester resins such as polyethylene terephthalate and polybutylene terephthalate, polysulfone resins, polyether ketone resins such as polyether ether ketone, entirely aromatic polyester resins such as polyarylate, ABS resins and polyolefin resins such as reinforced polypropylene. The thermoplastic resins may be used singly or as a combination of two or more. Among these resins, thermotropic liquid crystal polymers are preferably used.

The thermotropic liquid crystal polymers used in the present invention are preferably polymers having an ester linkage which can form an anisotropic melt phase. Examples of such polymers include liquid crystal polyesters having structural units such as aromatic oxycarbonyl units, aromatic dioxy units, aromatic and/or aliphatic dicarbonyl units and alkylenedioxy units and forming an anisotropic melt phase; and liquid crystal polyesteramides having structural units such as aromatic iminocarbonyl units, aromatic diimino units and aromatic iminooxy units in combination with the above structural units and forming an anisotropic melt phase.

Examples of the aromatic oxycarbonyl unit include structural units derived from p-hydroxybenzoic acid and 6-hydroxy-2-naphthoic acid. Examples of the aromatic dioxy unit include structural units derived from 4,4'-dihydroxybiphenyl, hydroquinone, 3,3',5,5'-tetramethyl-4,4'-dihydroxybiphenyl, t-butylhydroquinone, phenylhydroquinone, 2,6-dihydroxynaphthalene, 2,7-dihydroxynaphthalene, 2,2-bis(4-hydroxyphenyl)propane and 4,4'-dihydroxydiphenyl ether. Examples of the aromatic and/or aliphatic dicarbonyl unit include structural units derived from terephthalic acid, isophthalic acid, 2,6-naphthalenedicarboxylic acid, 4,4'-diphenyldicarboxylic acid, 1,2-bis(phenoxy)ethane-4,4'-dicarboxylic acid, 1,2-bis(2-chlorophenoxy)ethane-4,4'-dicarboxylic acid, 4,4'-diphenyl ether dicarboxylic acid, adipic acid and sebacic acid. Examples of the alkylenedioxy unit include structural units derived from ethylene glycol, 1,3-propylene glycol and 1,4-butanediol. Examples of the aromatic iminooxy unit include structural units derived from 4-ammophenol. Among these structural units, the structural unit derived from ethylene glycol is more preferable.

Examples of the liquid crystal polyester used in the process of the present invention include liquid crystal polyesters composed of structural units derived from p-hydroxybenzoic acid and structural units derived from 6-hydroxy-2-naphthoic acid; liquid crystal polyesters composed of structural units derived from p-hydroxybenzoic acid, structural units derived from 6-hydroxy-2-naphthoic acid and structural units derived from an aromatic dihydroxy compound and/or an aliphatic dicarboxylic acid; liquid crystal polyesters composed of structural units derived from p-hydroxybenzoic acid, structural units derived from 4,4'-dihydroxybiphenyl and structural units derived from terephthalic acid and/or adipic acid; liquid crystal polyesters composed of structural units derived from p-hydroxybenzoic acid, structural units derived from ethylene glycol and structural units derived from terephthalic acid; liquid crystal polyesters composed of structural units derived from p-hydroxybenzoic acid, structural units derived from ethylene glycol and structural units derived from terephthalic acid and/or isophthalic acid; liquid crystal polyesters composed of structural units derived from p-hydroxybenzoic acid, structural units derived from ethylene glycol, structural units derived from 4,4'-dihydroxydipbenyl and structural units derived from terephthalic acid and/or sebacic acid; and liquid crystal polyesters composed of structural units derived from p-hydroxybenzoic acid, structural units derived from ethylene glycol, structural units derived from an aromatic dihydroxy compound and structural units derived from an aromatic dicarboxylic acid such as terephthalic acid, isophthalic acid and 2,6-naphthalenedicarboxylic acid.

In the process of the present invention, as the liquid crystal polyester forming an anisotropic melt phase, liquid crystal polyesters composed of structural units represented or expressed by formulae [1], [2], [3] and [4] and liquid crystal polyesters composed of structural units represented or expressed by formulae [1], [3] and [4] are preferably used. Liquid crystal polyesters composed of structural units represented or expressed by formulae [1], [2], [3] and [4] are more preferably used. 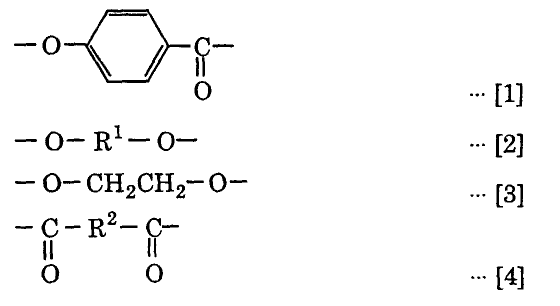 In formula [2], R¹ represents one or more groups selected from the following groups: 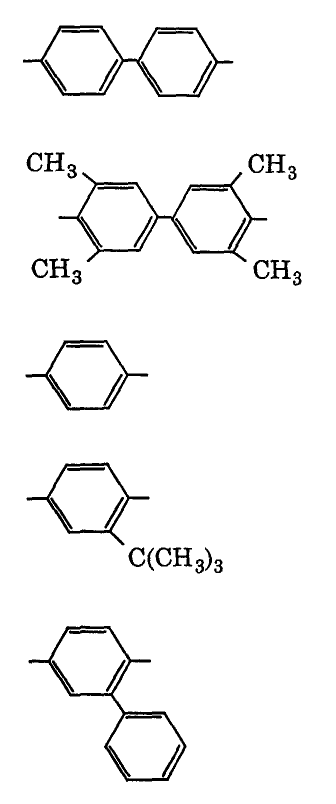 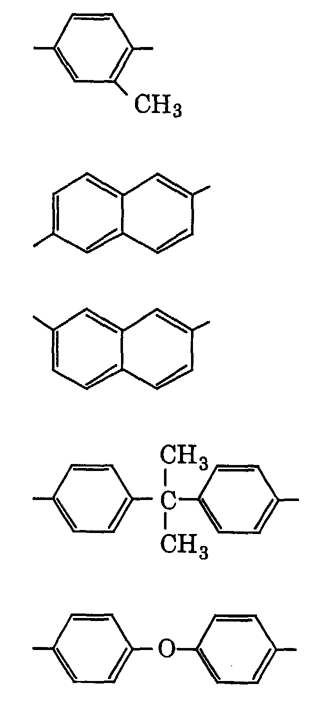 In formula [4], R² represents one or more groups selected from the following groups: 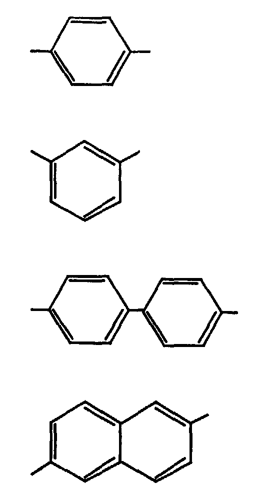 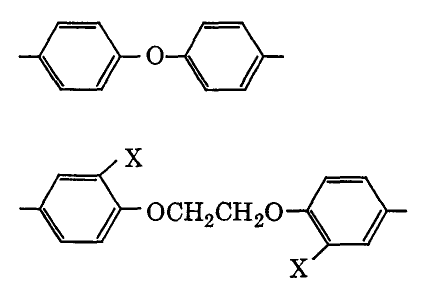 In the above formula, X represents hydrogen atom or chlorine atom.

The structural unit expressed by formula [1] is the structural unit derived from p-hydroxybenzoic acid. The structural unit represented by formula [2] is a structural unit derived from an aromatic dihydroxy compound selected from 4,4'-dihydroxybiphenyl, 3,3',5,5'-tetramethyl-4,4'-dihydroxybiphenyl, hydroquinone, t-butylhydroquinone, phenylhydroquinone, methylhydroquinone, 2,6-dihydroxynaphthalene, 2,7-dihydroxynaphthalene, 2, 2-bis(4-hydroxyphenyl)propane and 4,4'-dihydroxydiphenyl ether. The structural unit expressed by formula [3] is the structural unit derived from ethylene glycol. The structural unit represented by formula [4] is a structural unit derived from an aromatic dicarboxylic acid selected from terephthalic acid, isophthalic acid, 4,4'-diphenyldicarboxylic acid, 2,6-naphthalenedicarboxylic acid, 4,4'-diphenyl ether dicarboxylic acid, 1,2-bis(phenoxy)ethane-4,4'-dicarboxylic acid and 1,2-bis(2-chlorophenoxy)ethane-4,4'-dicarboxylic acid. Among the above structural units represented by formula [2], [3] or [4], structural units represented by formula [2] in which R¹ represents the following group: 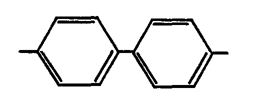 and structural units represented by formula [4] in which R² represents the following group: 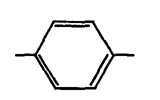 are more preferable.

The ratio of copolymerization of monomers in the above liquid crystal polyesters is not particularly limited. The preferable ratio of copolymerization for exhibiting the characteristics of the present invention is as follows: with respect to the copolymer composed of the structural units represented or expressed by formulae [1], [2], [3] and [4], the total amount of the structural units represented or expressed by formulae [1] and [2] is preferably about 30 to about 95% by mole and more preferably 40 to 85% by mole based on the total amount of the structural units represented or expressed by formulae [1], [2] and [3]; the amount of the structural unit expressed by formula [3] is preferably about 10 to about 70% by mole and more preferably about 15 to about 65% by mole based on the total amount of the structural units represented or expressed by formulae [1], [2] and [3]; the ratio[1]/[2] of the amount by mole of the structural unit expressed by formula [1] to the amount by mole of the structural unit represented by formula [2] is preferably about 75/25 to about 95/5 and more preferably about 78/22 to about 93/7; and the amount by mole of the structural unit represented by formula [4] is substantially the same as the total amount by mole of the structural units represented by formulae [2] and [3].

With respect to the copolymer composed of the structural units represented or expressed by formulae [1], [3] and [4], the amount of the structural unit expressed by formula [1] is preferably about 40 to about 90% by mole and more preferably about 60 to about 88% by mole of the total amount of the structural units expressed by formulae [1] and [3] from the standpoint of fluidity; and the amount by mole of the structural unit represented by formula [4] is substantially the same as the amount by mole of the structural unit expressed by formula [3]. "The amount by mole of one structural unit substantially the same as the amount by mole of another structural unit" refers that the amounts by mole of these structural units in the main chain of the copolymer excluding the chain end portions are the same but the amounts by mole of these structural units in the chain end portions are not always the same.

As the liquid crystal polyesteramide used in the present invention, liquid crystal polyesteramides which have p-iminophenoxy units derived from p-aminophenol in combination with the structural units represented or expressed by formulae [1], [2], [3] and [4] and form an anisotropic melt phase are preferable.

In the liquid crystal polyester and in the liquid crystal polyesteramides used in the present invention, in addition to the components forming the structural units represented or expressed by formulae [1], [2], [3] and [4] and p-aminophenol, aromatic dicarboxylic acids such as 3,3'-diphenyldicarboxylic acid and 2,2'-diphenyldicarboxylic acid; aliphatic dicarboxylic acids such as adipic acid, azelaic acid, sebacic acid and dodecanedicarboxylic acid; alicycic dicarboxylic acids such as hexahydroterephthalic acid; aromatic diols such as chlorohydroquinone, 3,4'-dihydroxybiphenyl, 4,4'-dihydroxydiphenylsulfone, 4,4'-dihydroxydiphenylsulfide, 4,4'-dihydroxybenzophenone and 3,4'-dihydroxybiphenyl; aliphatic and alicyclic diols such as propylene glycol, 1,4-butanediol, 1,6-hexanediol, neopentyl glycol, 1,4-cyclohexanediol and 1,4-cyclohexane-dimethanol; aromatic hydroxycarboxylic acids such as m-hydroxybenzoic acid and 2,6-hydroxynaphthoic acid; and aromatic aminocarboxylic acids such as p-aminobenzoic acid can be further copolymerized within the range such that the liquid crystal property is not adversely affected.

The thermotropic liquid crystal polymer is available, for example, as a commercial product having a trade name SIVERAS (manufactured by TORAY INDUSTRIES Inc.).

In the process of the present invention, it is preferable that the thermotropic liquid crystal polymer, the polyphenylene sulfide resin or a combination of these polymers is used as the base resin of the electrically conductive resin due to the high fluidity at a prescribed temperature which facilitates the molding and excellent dimensional stability.

The carbon fiber contained in the electrically conductive resin provides the carriage member with the electrically conductive property, heat resistance and mechanical strength. It is preferable that the content of carbon fiber is about 10 to about 100 parts by weight and more preferably about 20 to about 70 parts by weight based on 100 parts by weight of the thermoplastic resin. When the content of carbon fiber is less than 10 parts by weight based on 100 parts by weight of the thermoplastic resin, there is the possibility that the electric conductivity of the resin is insufficient and adverse effects of static electricity arise. When the content of carbon fiber exceeds 100 parts by weight based on 100 parts by weight of the thermoplastic resin, there is the possibility that moldability of the electrically conductive resin is poor.

To the electrically conductive resin used in the present invention, other additives may further be added to improve mechanical strength of the carriage member. For example, fiber reinforcing fillers and fine powder reinforcing fillers can be used. Examples of the fiber reinforcing filler include glass fiber, alumina fiber, silicon carbide fiber, ceramic fiber, asbestos fiber, gypsum fiber and metal fibers such as stainless steel fiber. Examples of the fine powder reinforcing filler include silicates such as wollastonite, cerussite, kaolin, mica, clay, bentnite, asbestos, talc and alumina silicate; metal oxides such as alumina, magnesium oxide, zirconium oxide and titanium oxide; carbonates such as calcium carbonate, magnesium carbonate and dolomite; and sulfates such as calcium sulfate, calcium pyrophosphate and barium sulfate. The fillers may also be optionally used after the preliminary treatment with a coupling agent such as silane coupling agents and titanium coupling agents.

In the process of the present invention, the electrically conductive resin can be injected into the mold for producing the desired carriage member. It is preferable that, in the mold for the carriage member, the gate through which the electrically conductive resin is injected to fill the mold is formed at the side of the head portion or the bearing hole. The electrically conductive resin is injected into the mold and then cooled to be solidified. Then, the mold is opened and the carriage member is taken out of the mold. When the laminate formed from arm pieces and spacers disposed alternately is used as the carriage member, molds for the arm pieces and molds for spacers are used separately and the electrically conductive resin is injected into each mold. The produced arm pieces and the spacers are disposed alternately to fabricate the carriage member composed of the laminate.

In the process for producing the oscillating actuator of the present invention, the coil and the carriage member prepared as described above are placed at prescribed positions in the mold for preparation of the oscillating actuator and a melted resin is injected into the mold to fill the mold so that the coil and the bearing hole of the carriage member are surrounded by the continuous resin.

In the process of the present invention, the resin used for surrounding the coil and the bearing hole in accordance with the above process is preferably an electrically insulating resin. It is preferable that the electrically insulating resin has a volume inherent resistivity exceeding about 10⁵ Ω·cm and more preferably about 10⁶ to about 10¹⁶ Ω·cm. The base resin for the electrically insulating resin is preferably a thermoplastic resin.

In the process of the present invention, the base resin used for the electrically insulating resin is not particularly limited. The same thermoplastic resins as those used as the base resin for the electrically conductive resin described above can be preferably used. As the base resin used for the electrically insulating resin, thermotropic liquid crystal polymers, polyphenylene sulfide resins and combinations of these resins are preferable due to the high fluidity at a prescribed temperature which facilitates the molding and excellent dimensional stability. Other additives may be added to the electrically insulating resin in a manner similar to the electrically conductive resin used for the carriage member. As the additives, the same additives as those added to the electrically conductive resin can be used.

When the electrically insulating resin is injected into the mold for the oscillating actuator in which the coil and the carriage member have been placed and fills the mold, the electrically insulating resin surrounds the coil. At the same time, the resin flows through the inlet for a resin of the carriage member, surrounds the fixing portion of the carriage member, further flows into the gap between the bearing hole and the portion of the mold for forming the shaft hole which is inserted into the bearing hole and forms an inner wall layer at the inside of the bearing hole along the surface of the mold. When the carriage member composed of a laminate is used, the electrically insulating resin fills the mold in a manner such that entire desired portions in the mold including peripheral portions of the bearing holes of the arm pieces at the outermost layer are surrounded by the resin. In this manner, the laminated structure of the carriage member can be fixed and maintained. Then, the electrically insulating resin injected into the mold is sufficiently cooled and the oscillating actuator is taken out of the mold.

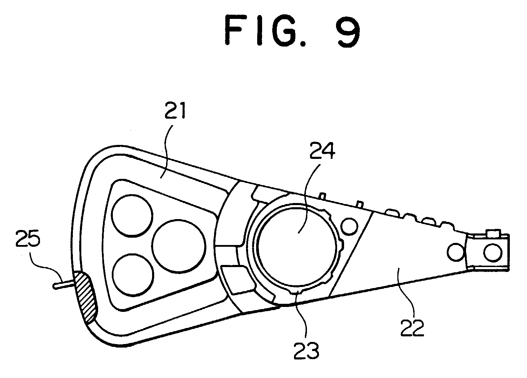

Figure 9 shows a plan view of an embodiment of the oscillating actuator produced in accordance with the process of the present invention. In the oscillating actuator of the present embodiment, the coil-holding member 21 and the carriage member 22 are integrally formed from a continuous resin. In the oscillating actuator, a shaft hole 24 has an inner wall layer 23 which is formed from the resin connected to the coil-holding member. The inner diameter of the inner wall layer in the shaft hole is the same as the size necessary for holding a bearing when the actuator is placed into a disk apparatus. The coil-holding member of the oscillating actuator of the present embodiment has a latch tong 25 for controlling the width of oscillation of the oscillating actuator. The latch tong can be placed in the mold at the time when the coil and the carriage member are placed in the mold.

To the oscillating actuator produced in accordance with the process of the present invention, a head suspension, a functional member such as a magnetic head and lead wires are attached and the obtained product is used as the actuator for disk apparatuses such as hard disk drives.

To summarize the advantages of the present invention, the oscillating actuator showing great strength of connection between the coil-holding member and the carriage member can be produced by forming a resin portion integrally extending into these parts. The oscillating actuator produced in accordance with the process of the present invention has a light weight and exhibits excellent mechanical strength and durability.

## Claims

1. A process for producing an oscillating actuator comprising a coil-holding member and a carriage member having a bearing hole and an arm, a coil and the bearing hole being surrounded by a continuous resin, which process comprises placing in a mold the coil and the carriage member having inlets for a melted resin which penetrates the carriage member to the bearing hole and filling an inside of the mold with the melted resin so that the melted resin is pushed into a gap between a portion of the mold for forming a shaft hole and the bearing hole via the inlets and an inner wall layer integrally connected to the coil-holding member is formed inside the bearing hole.

2. A process for producing an oscillating actuator according to Claim 1, wherein the carriage member has, on a side face thereof, a plurality of inlets for the melted resin which penetrates the carriage member to the bearing hole and a fixing portion which is formed as a wall separating the plurality of inlets.

3. A process for producing an oscillating actuator according to Claim 1, wherein the carriage member is a member integrally formed from an electrically conductive resin.

4. A process for producing an oscillating actuator according to Claim 1, wherein the carriage member is a laminate formed from arm pieces and spacers which are disposed alternately and are made of an electrically conductive resin.
